# EUROPÄISCHE PATENTANMELDUNG

(11) **EP 4 697 065 A1**
(43) Veröffentlichungstag der Anmeldung: **18.02.2026**
(21) Anmeldenummer: 25191185.5
(22) Anmeldetag: 23.07.2025
(51) Int. Cl.: G01S 7/4911, G01S 7/497, G01S 17/26

(54) **VERFAHREN ZUM NACHREGELN EINES LASER-SYSTEMS**

(30) Priorität: 07.08.2024 DE 102024207477
(71) Anmelder: Robert Bosch GmbH, 70442 Stuttgart (DE)
(72) Erfinder: Copeto, David, 71638 Ludwigsburg (DE); Noe, Stefan, 70563 Stuttgart (DE); Hoffarth, Joern, 72764 Reutlingen (DE)

(57) **Zusammenfassung**

Die Erfindung betrifft ein Verfahren (100) zum Nachregeln eines Laser-Systems (1), umfassend die nachfolgenden Schritte:
- Vorgeben (101) eines Zeitfensters, in dem ein Wechsel einer Modulationsfrequenz des Laser-Systems (1) durchgeführt wird,
- Blockieren (102) einer Messung durch das Laser-System (1) in dem vorgegebenen Zeitfenster,
- Durchführen (103) des Nachregelns des Laser-Systems (1) in dem vorgegebenen Zeitfenster, wobei ein Digital-Analog-Wandler (5) des Laser-Systems gestellt wird, um eine präzise Steuerung analoger Signale des Laser-Systems bereitzustellen.

Ferner betrifft die Erfindung ein Computerprogramm, eine Vorrichtung sowie ein Speichermedium zu diesem Zweck.

## Beschreibung

Die Erfindung betrifft ein Verfahren zum Nachregeln eines Laser-Systems. Ferner betrifft die Erfindung ein Computerprogramm, eine Vorrichtung sowie ein Speichermedium zu diesem Zweck.

### Stand der Technik

Das Nachregeln eines Laser-Systems während eines Messvorgangs kann gerade bei sehr kurzen Messzeiten zu Signalstörungen führen. Diese Signalstörungen können synchronisiert auftreten, insbesondere wenn sich eine Messmaschine des Laser-Systems und die Laserregelung den gleichen Systemtakt teilen. Solch eine Störung kann sich auf eine Messgenauigkeit des Laser-Systems auswirken.

### Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9 sowie ein computerlesbares Speichermedium mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Nachregeln, insbesondere gezielten Nachregeln, eines Laser-Systems, umfassend die nachfolgenden Schritte, wobei die Schritte wiederholt und/oder nacheinander durchgeführt werden können. Das Laser-System kann beispielsweise ein Laser-Entfernungsmessgerät sein. Das gezielte Nachregeln kann sich darauf beziehen, dass das Nachregeln gezielt zu bestimmten Zeitpunkten durchgeführt wird.

In einem ersten Schritt wird vorzugsweise ein Zeitfenster vorgegeben, in dem ein Wechsel einer Modulationsfrequenz des Laser-Systems durchgeführt wird. Die Modulationsfrequenz bezieht sich insbesondere auf ein moduliertes emittiertes Licht eines Lasers des Laser-Systems.

In einem weiteren Schritt wird eine Messung durch das Laser-System in dem vorgegebenen Zeitfenster blockiert. Die Messung durch das Laser-System betrifft insbesondere eine Messung eines reflektierten Lichts im Rahmen einer Entfernungsmessung, wenn das Laser-System als ein Laser-Entfernungsmessgerät ausgebildet ist. Das Blockieren der Messung kann indizieren, dass während des vorgegebenen Zeitfensters keine Sensordaten erfasst werden, oder auch, dass erfasste Sensordaten nicht verarbeitet oder nicht berücksichtigt werden.

In einem weiteren Schritt wird vorzugsweise das Nachregeln des Laser-Systems in dem vorgegebenen Zeitfenster durchgeführt. Das Nachregeln kann beispielsweise durch einen Messregler des Laser-Systems durchgeführt werden. Ein Signal von einer Mess-Statemachine gibt dafür vorzugsweise dem Messregler des Laser-Entfernungsmessgeräts das Zeitfenster vor, in dem die Modulationsfrequenzen gewechselt werden sollen. Es kann beispielsweise ein Digital-Analog-Wandler des Laser-Systems gestellt, bzw. eingestellt, werden, um eine präzise Steuerung analoger Signale des Laser-Systems bereitzustellen. Sensoren können dafür kontinuierlich Parameter wie eine Laserleistung, d.h. eine Ausgangsleistung eines Lasers des Laser-Systems, einen Laserstrom, Temperaturen in dem Laser-System oder andere regelrelevante Größen überwachen. Diese Informationen können an den Messregler zurückgemeldet werden. Basierend auf diesen Rückmeldungen kann der Messregler die digitalen Steuersignale anpassen, die zum Digital-Analog-Wandler gesendet werden.

Durch das Verfahren gemäß der Erfindung können vorteilhaft Störungen der Messung durch das Laser-System unterbunden oder zumindest reduziert werden, die durch das Nachregeln während der Messung entstehen.

Des Weiteren ist es im Rahmen der Erfindung optional möglich, dass das Zeitfenster für regelmäßige definierte Abständen vorgegeben wird, um in den regelmäßigen definierten Abständen jeweils das Nachregeln durchzuführen. Beispielsweise könnte alle 15 ms ein jeweiliges Zeitfenster vorgesehen sein, welches beispielsweise eine Länge von 10 µs hat.

Vorzugsweise kann vorgesehen sein, dass die regelmäßigen definierten Abstände synchronisiert mit einem Wechseln der Modulationsfrequenz des Laser-Systems während eines Messvorgangs vorgegeben werden. In anderen Worten kann für den Wechsel zwischen zwei Modulationsfrequenzen das Zeitfenster vorgegeben werden, um darin jeweils das Nachregeln durchzuführen. So kann sichergestellt sein, dass das Nachregeln immer nur während des Wechsels der Modulationsfrequenz durchgeführt wird.

Es kann von Vorteil sein, wenn im Rahmen der Erfindung das Verfahren ferner den folgenden Schritt umfasst:
- Simulieren des Wechsels der Modulationsfrequenz außerhalb des Messvorgangs, um innerhalb und außerhalb des Messvorgangs eine identische Regelhäufigkeit des Nachregelns bereitzustellen.

Dadurch kann vorteilhaft außerhalb des Messvorgangs ein gleicher Konfigurationssatz des Messreglers, d.h. beispielsweise eine gleiche Filterbandbreite und/oder ein gleicher Verstärkungsfaktor, wie innerhalb, bzw. während, des Messvorgangs verwendet werden.

Beispielsweise kann es vorgesehen sein, dass das Verfahren vor dem Vorgeben des Zeitfensters ferner die folgenden Schritte umfasst:
- Definieren eines Zielwertes für eine Laserleistung des Laser-Systems,
- Bestimmen einer aktuellen Laserleistung des Laser-Systems,
- Vergleichen der aktuellen Laserleistung mit dem definierten Zielwert,
- Durchführen des Nachregelns des Laser-Systems, wenn die aktuelle Laserleistung den definierten Zielwert um eine definierte Menge über- oder unterschreitet.

Der Zielwert kann definiert werden, um eine Hysterese des Laser-Systems zu überbrücken und erst ab Erreichen des Zielwertes, bzw. ab Erreichen eines Abstandes innerhalb der definierten Menge, das Vorgeben des Zeitfensters durchzuführen. Die definierte Menge kann auch 1 oder Null sein, sodass auch denkbar ist, dass der definierte Zielwert an sich überschritten oder erreicht werden muss. Das Bestimmen der aktuellen Laserleistung kann unter Verwendung eines entsprechenden Sensors des Laser-Systems durchgeführt werden.

Ein weiterer Vorteil im Rahmen der Erfindung ist erzielbar, wenn das Verfahren ferner die folgenden Schritte umfasst:
- Bestimmen einer neuen aktuellen Laserleistung nach dem Durchführen des Nachregelns des Laser-Systems,
- Vergleichen der neuen aktuellen Laserleistung mit dem definierten Zielwert,
- Initiieren eines sicheren Zustands des Laser-Systems, wenn die neue aktuelle Laserleistung den definierten Zielwert um eine definierte Menge über- oder unterschreitet, wobei in dem sicheren Zustand durch das Laser-System eine reduzierte Menge an Licht, insbesondere kein Licht, emittiert wird.

Hierbei wird insbesondere ermittelt, ob eine regelfreie Messung möglich ist. Dadurch kann zunächst ermittelt werden, ob das Nachregeln erfolgreich war und der definierte Zielwert nun erreicht ist. Wenn dies nicht der Fall ist, so kann es vorteilhaft sein, das Laser-System in den sicheren Zustand zu überführen, um mögliche Fehler, Beschädigungen oder Gefahren zu vermeiden. Es kann auch vorgesehen sein, dass mehrmals, beispielsweise für eine bestimmte Anzahl oder Dauer, nachgeregelt und verglichen wird, bevor der sichere Zustand initiiert wird. Anschließend kann eine manuelle oder automatisierte Fehleranalyse durchgeführt werden. Die reduzierte Menge an Licht ist insbesondere unbedenklich für Augen eines Menschen.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann. Die Vorrichtung kann auch eine analoge diskrete elektronische Schaltung oder eine integrierte elektronische Schaltung sein, die entsprechend eingerichtet ist, das erfindungsgemäße Verfahren auszuführen.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Speichermediums sowie eines Computerprogramms gemäß Ausführungsbeispielen der Erfindung,
- Fig. 2: eine schematische Darstellung eines Laser-Systems gemäß Ausführungsbeispielen der Erfindung.

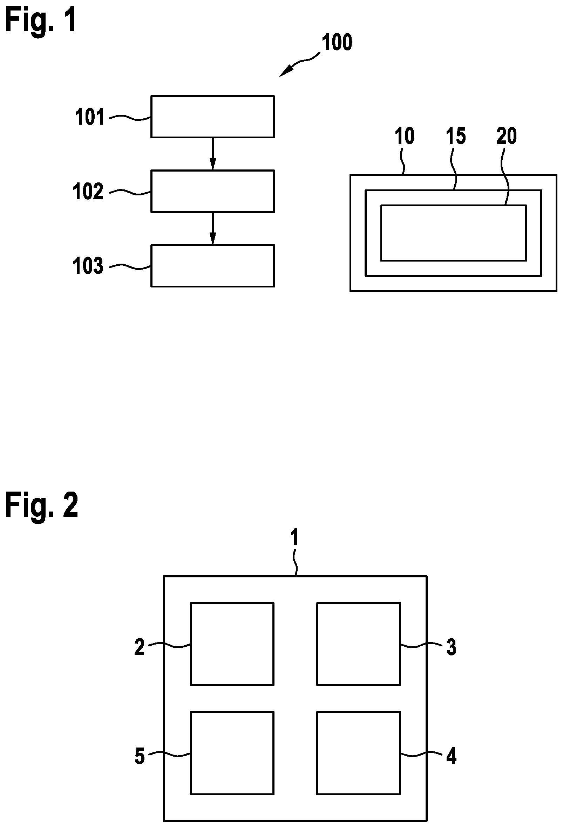

In Fig. 1 sind ein Verfahren 100, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Nachregeln eines Laser-Systems 1. In einem ersten Schritt 101 wird ein Zeitfenster vorgegeben, in dem ein Wechsel einer Modulationsfrequenz des Laser-Systems 1 durchgeführt wird. In einem zweiten Schritt 102 wird eine Messung durch das Laser-System 1 in dem vorgegebenen Zeitfenster blockiert. In einem dritten Schritt 103 wird das Nachregeln des Laser-Systems 1 in dem vorgegebenen Zeitfenster durchgeführt, wobei ein Digital-Analog-Wandler 5 des Laser-Systems gestellt wird, um eine präzise Steuerung analoger Signale des Laser-Systems bereitzustellen.

Das Verfahren der vorliegenden Erfindung betrifft ein Laser-System 1 und gemäß Ausführungsbeispielen insbesondere ein Laser-Entfernungsmessgerät, das die indirekte Time of Flight (iToF)-Messung verwendet. Für dieses Ausführungsbeispiel sei auf Fig. 2 verwiesen. Dieses Laser-Entfernungsmessgerät 1 arbeitet beispielsweise mit einer Messung einer Phasenverschiebung eines modulierten Lichtsignals, das vom Laser-Entfernungsmessgerät ausgesendet und von einem Zielobjekt reflektiert wird. Im Folgenden wird die Funktionsweise der indirekten Time of Flight (iToF)-Messung beschrieben. Zunächst kann ein Laser 3 im Laser-Entfernungsmessgerät 1 moduliertes Licht, beispielsweise im infraroten oder sichtbaren Bereich, in Richtung eines Zielobjekts sendet. Die Modulation erfolgt insbesondere mit einer sinusförmigen oder Rechteckwelle. Das modulierte Licht trifft anschließend auf das Zielobjekt und wird zurück zum Laser-Entfernungsmessgerät 1 reflektiert. Ein Detektor 4 im Messgerät kann nun das reflektierte Licht empfangen. Da das Licht eine gewisse Zeit benötigt, um die Strecke hin und zurück zu legen, kommt es zu einer Phasenverschiebung zwischen dem ausgesendeten und dem empfangenen Signal. Diese Phasenverschiebung zwischen dem ausgesendeten und dem empfangenen Signal kann anschließend gemessen werden. Diese Phasenverschiebung ist insbesondere proportional zur zurückgelegten Entfernung des Lichts. Die Entfernung kann anschließend aus der Phasenverschiebung unter Berücksichtigung der Wellenlänge der Modulation und der Lichtgeschwindigkeit berechnet werden. Hierbei kann ferner vorgesehen sein, dass eine Referenzphase mit einem konstanten Abstand bestimmt wird, um die Phasenverschiebung auf Basis eines Vergleiches mit der Referenzphase zu bestimmen.

Um die Messgenauigkeit und Reichweite zu erhöhen und Mehrdeutigkeiten bei der Phasenmessung zu vermeiden, können mehrere Modulationsfrequenzen verwendet werden. Beispielsweise könnten zwei, drei, vier, acht, oder auch 16 verschiedene Modulationsfrequenzen verwendet werden. Für das Wechseln der Modulationsfrequenzen kann eine Mess-Statemachine verwendet werden, die auch als Messzustandsautomat bezeichnet werden kann. Die Mess-Statemachine ist insbesondere ein Modell, das zur Steuerung und Verwaltung von Messprozessen verwendet werden kann. Sie basiert insbesondere auf dem Konzept eines Zustandsautomaten (State Machine), welcher verschiedene Zustände und Übergänge zwischen diesen Zuständen definiert. Diese Zustände repräsentieren beispielsweise unterschiedliche Phasen oder Schritte im Messprozess, zum Beispiel Initialisierung, Messung, Messung mit einer bestimmten Modulationsfrequenz, Datenspeicherung oder Fehlerbehandlung. Übergänge können definieren, wie und wann der Wechsel von einem Zustand zum anderen stattfindet. Diese werden beispielsweise durch Ereignisse oder Bedingungen ausgelöst, wie z.B. das Eintreffen eines Messsignals oder das Erreichen eines Zeitlimits. Eingaben sind beispielsweise Startsignale, Messwerte oder Fehlerbedingungen. Ausgaben können Aktionen oder Reaktionen des Messzustandsautomats auf einen bestimmten Zustand oder Übergang sein.

Dazu gehören beispielsweise das Senden von Signalen, das Speichern von Daten oder das Auslösen von Alarmen.

Das Laser-Entfernungsmessgerät 1 kann einen Messregler 2 aufweisen. Der Messregler 2 übernimmt insbesondere eine Steuerung des Lasers 3.

So kann der Messregler 2 eine Emission des Lasers 3 steuern, indem er ein Ein- und Ausschalten sowie eine Intensität eines Laserstrahls des Lasers 3 regelt. Dadurch kann sichergestellt werden, dass der Laserstrahl mit der richtigen Leistung und den richtigen Eigenschaften ausgesendet wird.

Ferner kann ein Laserstrahl des Laser-Systems 1 moduliert werden, beispielsweise in Form von gepulstem Licht und/oder einer kontinuierlichen Welle mit variabler Modulationsfrequenz. Nach dem Empfang des reflektierten Laserstrahls durch den Detektor 4 kann das empfangene Signal verarbeitet werden. Dies umfasst beispielsweise eine Verstärkung, Filterung und Umwandlung des empfangenen analogen Signals in ein digitales Signal zur weiteren Analyse, insbesondere durch einen Analog-Digital-Wandler (nicht dargestellt). Ferner kann die Phasenverschiebung zwischen dem ausgesendeten und dem empfangenen Signal gemessen und gegebenenfalls mit der Referenzphase verglichen werden.

Der Messregler 2 kann ferner regelmäßig Kalibrierungen durch führen, um sicherzustellen, dass die Messungen präzise sind. Dafür kann er einen Zustand des Lasers 3 und des Detektors 4 überwachen, um sicherzustellen, dass diese ordnungsgemäß funktionieren.

Ein Signal von einer Mess-Statemachine gibt im Rahmen des Verfahrens gemäß Ausführungsbeispielen der Erfindung vorzugsweise dem Messregler 2 des Laser-Entfernungsmessgeräts 1 ein Zeitfenster vor, in dem die Modulationsfrequenzen gewechselt werden. Während des Frequenzwechsels kann insbesondere nicht gemessen werden. Der Messregler 2 kann dieses Zeitfenster nutzen, um nachzuregeln. Wird eine Messung beendet, aber der Laser 3 weiterhin betrieben, springt vorzugsweise ein Ersatz-Timer im Messregler 2 ein und simuliert ein Timing eines Messvorgangs. Dadurch kann eine Regelhäufigkeit identisch sein und es kann derselbe Konfigurationssatz (Filterbandbreite, Verstärkungsfaktor) wie während der Messung verwendet werden. Weicht die Laserleistung um eine definierte Menge von einem definierten Zielwert ab, springt der Messregler 2 vorzugsweise unverzüglich an und versucht korrigierend einzugreifen. Schafft er das nicht, werden die bereits beschriebenen Sicherheitslimits vorzugsweise überschritten und der Laser 3 geht in einen Safe State, wobei der Safe State insbesondere ein sicherer Zustand ist, in dem das Laser-System 1 kein Licht emittiert.

Insbesondere ist demnach vorgesehen, dass ein Alternativtakt generiert wird, wenn die Mess-Statemachine abgeschaltet ist.

Während des Startens des Lasers 3 ist die abgegebene Laserleistung noch zu schwach und damit außerhalb der Hysterese. Ein Digital-Analog-Wandler 5 kann im Rahmen des Nachregelns durch ein entsprechendes Signal ständig angepasst werden. Nach Erreichen des definierten Zielwertes der Laserleistung wird vorzugsweise nur noch während des Frequenzwechsels ein Zeitfenster freigegeben, indem der Digital-Analog-Wandler 5 nachgeregelt wird.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Nachregeln eines Laser-Systems (1), umfassend die nachfolgenden Schritte:
- Vorgeben (101) eines Zeitfensters, in dem ein Wechsel einer Modulationsfrequenz des Laser-Systems (1) durchgeführt wird,
- Blockieren (102) einer Messung durch das Laser-System (1) in dem vorgegebenen Zeitfenster,
- Durchführen (103) des Nachregelns des Laser-Systems (1) in dem vorgegebenen Zeitfenster, wobei ein Digital-Analog-Wandler (5) des Laser-Systems gestellt wird, um eine präzise Steuerung analoger Signale des Laser-Systems bereitzustellen.

2. Verfahren (100) nach Anspruch 1,
**dadurch gekennzeichnet,**
**dass** das Zeitfenster für regelmäßige definierte Abstände vorgegeben wird, um in den regelmäßigen definierten Abständen jeweils das Nachregeln durchzuführen.

3. Verfahren (100) nach Anspruch 2,
**dadurch gekennzeichnet,**
**dass** die regelmäßigen definierten Abstände synchronisiert mit einem Wechseln der Modulationsfrequenz des Laser-Systems (1) während eines Messvorgangs vorgegeben werden.

4. Verfahren (100) nach Anspruch 3,
**dadurch gekennzeichnet,**
**dass** das Verfahren (100) ferner den folgenden Schritt umfasst:
- Simulieren des Wechsels der Modulationsfrequenz außerhalb des Messvorgangs, um innerhalb und außerhalb des Messvorgangs eine identische Regelhäufigkeit des Nachregelns bereitzustellen.

5. Verfahren (100) nach einem der vorhergehenden Ansprüche, **dadurch gekennzeichnet,**
**dass** das Verfahren (100) vor dem Vorgeben (101) des Zeitfensters ferner die folgenden Schritte umfasst:
- Definieren eines Zielwertes für eine Laserleistung des Laser-Systems (1),
- Bestimmen einer aktuellen Laserleistung des Laser-Systems (1),
- Vergleichen der aktuellen Laserleistung mit dem definierten Zielwert,
- Durchführen des Nachregelns des Laser-Systems (1), wenn die aktuelle Laserleistung den definierten Zielwert um eine definierte Menge über- oder unterschreitet.

6. Verfahren (100) nach Anspruch 5,
**dadurch gekennzeichnet,**
**dass** das Verfahren (100) ferner die folgenden Schritte umfasst:
- Bestimmen einer neuen aktuellen Laserleistung nach dem Durchführen des Nachregelns des Laser-Systems (1),
- Vergleichen der neuen aktuellen Laserleistung mit dem definierten Zielwert,
- Initiieren eines sicheren Zustands des Laser-Systems (1), wenn die neue aktuelle Laserleistung den definierten Zielwert um eine definierte Menge über- oder unterschreitet, wobei in dem sicheren Zustand durch das Laser-System (1) eine reduzierte Menge an Licht, insbesondere kein Licht, emittiert wird.

7. Verfahren (100) nach einem der vorhergehenden Ansprüche,
**dadurch gekennzeichnet,**
**dass** das Laser-System (1) ein Laser-Entfernungsmessgerät ist und das Nachregeln durch einen Messregler (2) des Laser-Entfernungsmessgeräts durchgeführt wird.

8. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

9. Vorrichtung (10) zur Datenverarbeitung, die eingerichtet ist, das Verfahren (100) nach einem der Ansprüche 1 bis 7 auszuführen.

10. Computerlesbares Speichermedium (15), umfassend Befehle, die bei der Ausführung durch einen Computer (10) diesen veranlassen, die Schritte des Verfahrens (100) nach einem der Ansprüche 1 bis 7 auszuführen.
